# EUROPEAN PATENT SPECIFICATION

(11) **EP 1 613 877 B1**
(45) Date of publication and mention of the grant of the patent: **24.01.2007**
(21) Application number: 04723124.6
(22) Date of filing: 24.03.2004
(51) Int. Cl.: F16G 11/04, F21V 21/02

(54) **LOCKING DEVICE**
VERRIEGELUNGSVORRICHTUNG
DISPOSITIF DE BLOCAGE

(30) Priority: 24.03.2003 SE 0300787
(43) Date of publication of application: 11.01.2006
(73) Proprietor: Iu, Kin Lap, 382 44 Nybro (SE); Yiu, Chi Wai, Hong Kong (CN)
(72) Inventor: Iu, Kin Lap, 382 44 Nybro (SE); Yiu, Chi Wai, Hong Kong (CN)
(74) Representative: Bjelkstam, Peter
(86) International application number: PCT/SE2004/000455
(87) International publication number: WO 2004/085876

(56) References cited:
- WO-A1-97/01063
- AT-B- 196 185
- DE-A1- 4 441 005
- US-A- 6 034 328

## Description

The present invention refers to a locking device for adjustable position fixing to a wire or rope for supporting of a detail e.g. a cover for a fitting in a ceiling, said locking device consists of a housing surrounding different locking means one of these having an extension, which during impression is releasing a clamping means from its pressure against said wire.

For existing structures on the market of the type described, locking devices are today used for fixing into position of a deteil or other fitting detail in the form of a cover, which hides a supporting device in the form of a hook for a fitting, around a wire or rope, which is attached to a ceiling. A locking device of today comprises locking means consisting of two cooperating sleeves in the form of male part, a surrounding female part and clamping means. The locking device comprises an opening formation through which said wire extends. The female part comprises a conically formed mantle surface. The male part is pressed against the mantle surface by aid of a spring and a clamping means is pressing against said wire, whereby the locking device is fixed to said wire. The female part supports said cover. In order to release said pressure against the wire the male part is provided with a sleeve extension, by which the locking device together with the cover can be moved upwards and downwards and be fixed into a desired position along the wire, said sleeve extension in the end of the male part in a direction upwards in one embodiment example and downwards in another embodiment example of the locking device. The clamping means are released form their pressure against the wire by pulling the said sleeve extension downwards in the first variant and or to press the same from above and downwards in the second variant. When a cover is used it is not possible to press the sleeve extension downwards since the same is totally covered. Instead it is possible to pull the same downwards but in this case both hands must be used, one hand to keep the ffemale part and the other to pull the sleeve extension downwards, which is complicated and time consuming and often after such a montage a gap or an opening occurs between the edge of the cover and the ceiling, which can be very much disturbing.

One object of the present invention is to solve the problems of the above mentioned structures by having the locking means surrounded by a housing or a cover, the female part being provided with a sleeve extension which is within reach for impressing at a cover from below and which is this way release the clamping means from their pressure against the wire at the same time as any gap or opening does not occur after pushing upwards and locking by aid of the locking device according to the invention thanks to that an afterwards exciting spring effect is present in a direction upwards after the fixing or locking itself.

Thanks to the present invention a locking device has now been provided for adjustable fixing into position of a wire or rope extending through the same, said wire supports a detail such as a fitting detail, a lampcover or a cover, which is used for covering a supporting device for an armature of a ceiling. The locking device according to the invention comprises locking means for providing a clamping of said locking device to the wire. The locking means are located in the surrounding housing or cover and consist of two into each other telescopically displaceable sleeves and a clamping means cooperating with these. The housing comprises gable walls having openings in line with a hole formation, which also is extending through said sleeves. The first sleeve constitutes a female part, which partly incoperates the second sleeve constituting a male part. The female part is provided with a protruding sleeve extension in the one opening of the housing in a direction downwards, at the same time as the one end of the male part is surrounded by the female part and the other free end of which protrudes from the female part. Here a first spring means is provided, which presses the female part towards the first gable wall at the same time as a second spring means is provided at the female part which presses the male part in a direction towards the second gable wall. A clamping means constitutes a pressure against the wire in that it is displaceable provided in an opening in that end of the male part, which is included in the male part. In order to obtain a clamping or fixing to the wire a conically formed inner mantle surface in said female part is provided in such a way that the same presses the clamping means in a direction inwards towards the hollow formation through which the wire is extending. The second spring means is pressing the male past in a direction towards the second gable wall, whereby a locking or fixing to the wire occurs. When the locking device shall be released from the wire the sleeve extension is pressed into the opening in its adjacent gable wall, so that the spring means are pressed together, the clamping means being released from its pressure against the wire and the locking device will be flexibly adjustable along the wire. In a preferred embodiment example of the invention the opening in the male part mainly consists of horizontally lying channels having clamping means in the form of locking balls which are displaceable to the sides and placed in the channels in the male part. A loosening of the pressing together of the spring means occurs in this case in that the sleeve expression is pressed inwards, the locking ball are given enough place to move further side away. The wire will in this case be easy to move through the hole formation by the locking device and outwards through the sleeve extension, whereupon the locking device can be displaced upwards and downwards along the wire. The spring means according to the invention can consist of screw springs. The most important advantages of the invention thus will be that the sleeve extension of the locking device is easy to reach for operation from below by impressing the same. This is especially preferable during fastening of a cover towards a ceiling around a fastening means, since the cover very quickly and easily can be fixed by one hand with a connection against the ceiling. Two details can further be fixed to each other in a similar easy way along the wire, where the the locking devices are fixed at each outer side of the details turned in such a way that the sleeve extensions protrude outwards from the details to opposite directions.

The invention will now be described in more detail below with the aid of preferred embodiment examples with reference to the accompanying drawings, on which
- Figure 1: shows a vertical section through a locking device in different steps in the detail views a - c, in which a wire is run through the same and is fixed and relesed and
- Figure 2: shows a vertical section through a cover intended to be supported by a ceiling.

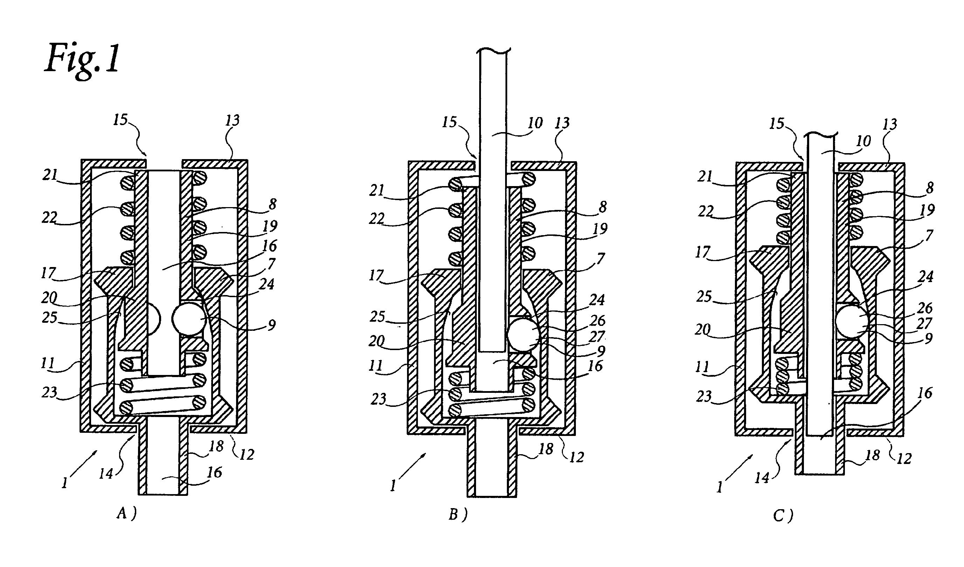

As can be seen from fig. 1 a locking device 1 is shown comprising locking means 7-9 in the form of sleeves 7,8, a clamping means 9 in the form of locking balls 27 and a housing 11 having gable walls 12,13 provided with openings 14,15 and a hollow formation 16. The sleeves 7,8 constitute a female part 17 and a male part 19 having a sleeve extension 18. One end 20 of the male part 19 is surrounded by said female part 17 and the other end 21 of which protrudes from the male part 17 having a first spring means 22. A second spring means 23 is provided below the female part 17 having a conical formed inner mantle surface 25. An opening 24 in the male part 19 is provided with horizontally lying channels 26, which are provided with said locking balls 27.

In the part views A, B and C in fig. 1 it is illustrated in different steps how the wire 10 is passed through the locking device 1. In the part view A is illustrated step 1, before the wire 10 is inserted into the opening 15, so that the second spring means 23 is pressing up the male part 19 towards the conically formed mantle surface 25 and the second gable wall 13 at the same time as the first spring means 22 is applicated around the male part 19. In the part view B is step 2 illustrated when the wire 10 is inserted downwards into the hollow formation 16 and abuts the locking balls 27, which are pressed aside by the wire outwards in a direction towards the conically formed mantle surface 25, so that the male part 19 is pressed downwards a bit and the second spring means 23 is somewhat pressed together. In this way the locking balls 27 receive a space to move further aside in the horizontally lying channel 26 to receive a space to pass the wire 10 further through the hollow formation 16 and out through the sleeve extension 18, so that the locking balls 27 are pressed outwards in a direction towards the wire 10 by the pressure from the spring means 22,23. In this way a positioning fixing of the locking device I occurs against the wire 10. In the part view C is illustrated how the fixing into a position is released in a step 3 by pressing the sleeve extension 18 in a direction upwards, so that a space is created for the locking balls 27 to move in a direction from the wire 10 in the horizontally lying channel 26 and the pressing force against the wire is released, so that the locking device can be moved upwards and downwards along the wire 10 for a new fixation into a position at another place to the wire 10.

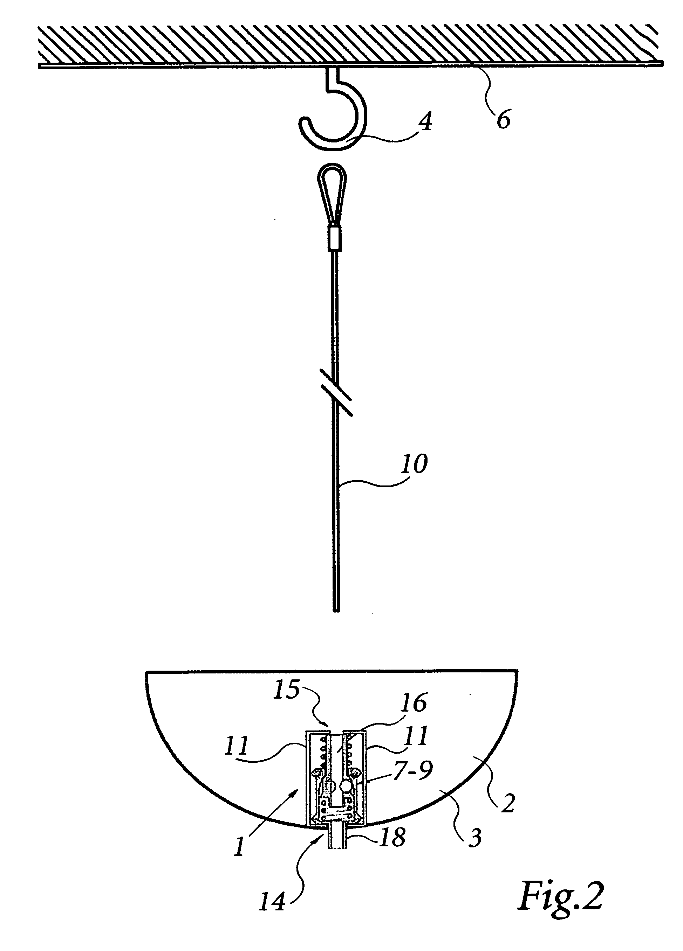

As can be seen from fig. 2 the detail 2 is illustrated in the form of a cover 3, which is applicated to the housing 11 of the locking device 1.The wire 10 is supported by a ceiling 6 in a supporting means 4. Thereafter the wire 10 is passed through the hollow formation 16 of the locking device 1 through the openings 14,15 out through the sleeve extension 18, so that the locking means 7-9 are released somewhat from the wire 10. By pressing in the sleeve extension 18 the locking means 7-9 are further released, so that the cover 3 easier can be displaced further all the way up against the ceiling 6. Here the cover 3 is locked against the wire 10 by the locking means 7-9, when again releasing the pressed in sleeve extension 18, so that the cover 3 is fixed into a position, which is a stop against the ceiling 6 and the cover 3 totally cover the supporting means 4 at the same time as a subsequent spring effect by one of the springs urges the locking device in a direction upwards against the ceiling. In fig. 1 and 2 can be seen that the load of the cover 3 and an established pressure on the cover 3, in its position against the ceiling, is transferred to the free end 21 of the male part 19, so that the locking balls 27, which are already pressing against the Wire 10, in turn are further pressed against the wire 10, when they by the load and pressure are urged further upwards in the conically formed mantle surface 25.

## Claims

1. A locking device for adjustable fixing into a position on a wire or rope (10) passing through the same, and which is intended for supporting a detail (2) preferably a fitting e.g. a cover (3) in order to hide a supporting means (4) of a fitting in a ceiling (6), and which comprises locking means (7-9) cooperating with each other in providing a clamping of the locking device (1) to the wire (10), said locking means consist of two in each other telescopically displaceable sleeves (7,8) provided in a housing or cover (11) to which the the fittings (3) is fixed, and at least one clamping means (9) cooperating with these, said housing (11) comprises openings (14,15) in its gable walls (12,13) lying mainly in line with a hollow formation (16) for the wire (10) extending through said sleeves (7,8) and of which sleeves (7,8) the first one (7) constitutes a female part (17), which partly comprises the second sleeve (8) and which comprises a sleeve extension (18) protruding in the one opening (14) of the housing (11) at the same time as the second sleeve (8) constitutes a male part (19), the one end (20) of which is surrounded by the female part (17) and the second free end (21) of which protrudes from the female part (17), **characterized in that** a first spring means (22) is provided at said free end (21), which is intended to press the female part (17) in a direction towards the one first gable wall (12), which is intended to support the fitting (3) and after mounting springing press the same in a direction towards the ceiling (6), at the same time as a second spring means (23) is provided at the female part (17) to press the male part (19) in a direction towards the second gable wall (13), said clamping means (9) in a way known per se can be pressed against the wire (10) by that it is displaceably provided in an opening (24) **in that** end (20) of the male part (19), which is accomodated in the female part (17), whereby in clamping of the locking device (1) to the wire (10) a conically formed inner mantle surface (25) in the female part (17) is pressing the clamping means (9) in a direction inwards to the wire (10) in the hollow formation (16) while the pressing of the second spring means (23) of the male part (19) in a direction towards the second gable wall (13) and in loosening of the locking device (1) from the wire (10) the spring means (22,23) can be pressed together by pressing in the sleeve extension (18) into the opening (14) in its adjacent gable wall (12), which is situated in connection to the outside of the fitting (3), so that the clamping means (9) is releasable from its pressure against the wire (10).

2. A locking device according to claim 1, **characterized in that** the opening (24) in the male part (19) consists mainly of a horizontally lying channel (26) accomodating a clamping means in the form of a locking ball (27), which is aside movably applicated in the channel (26) through said male part (19).

3. A locking device according to claim 1 or 2, **characterized in that** the locking balls (27) are getting enough space to move further aside by pressing in the sleeve extension (18) and by the pressing together of the second spring means (23), so that the wire (10) is easily insertable through the hollow formation (9) in the locking device (1) and outwards through the sleeve extension (18), whereupon the locking device (1) can be displaced upwards and downwards along the wire (10).

4. A locking device according to any of the preceding claims, **characterized in that** the spring means (22,23) consist of screw springs.

## Patentansprüche

1. Verriegelungsvorrichtung zur justierbaren Befestigung in einer Position an einem Draht oder Seil (10), das durch diese hindurchgeführt wird und die zur Befestigung eines Gegenstands (2) vorgesehen ist, insbesondere einem Montageteil wie beispielsweise einer Abdeckung (3), um ein Haltemittel (4) eines Montageteils an einer Decke (6) zu verdecken, wobei die Vorrichtung Verriegelungsmittel (7-9) aufweist, die miteinander zusammenwirken, indem sie eine Klemmung der Verriegelungsvorrichtung (1) an dem Draht (10) verursachen, wobei die Verriegelungsmittel aus zwei in sich selbst teleskopartig verschiebbaren Muffen (7, 8) bestehen, die in einem Gehäuse oder einer Abdeckung (11) untergebracht sind, an dem das Montageteil (3) befestigt ist und wenigstens ein Klemmmittel (9), das mit diesen zusammenwirkt, wobei das Gehäuse (11) in seinen Giebelwänden (12, 13) Öffnungen (14, 15) aufweist, die im Wesentlichen in einer Linie mit einer hohlen Struktur (16) für den Draht (10) liegen, der sich durch die Muffen (7, 8) hindurch erstreckt, wobei die erste (7) der Muffen (7, 8) ein Führungsteil (17) darstellt, das teilweise die zweite Muffe (8) beinhaltet und die eine Muffenverlängerung (18) beinhaltet, die aus der einen Öffnung (14) des Gehäuses (11) heraussteht, während zur selben Zeit die zweite Muffe (8) ein Steckteil (19) darstellt, dessen eine Ende (20) von dem Führungsteil (17) umgeben ist und dessen zweites freie Ende (21) aus dem Führungsteil (17) heraussteht,
**dadurch gekennzeichnet, dass**
ein erstes Federmittel (22) an dem freien Ende (21) angeordnet ist, um das Führungsteil (17) in eine Richtung gegen die eine erste Giebelwand (12) zu drücken, die zur Befestigung des Montageteils (3) vorgesehen ist und die dasselbe nach der Montage durch Federspannung in eine Richtung gegen die Decke (6) drückt, während zur selben Zeit ein zweites Federmittel (23) am Führungsteil (17) angeordnet ist, um das Steckteil (19) in eine Richtung gegen die zweite Giebelwand (13) zu drücken, wobei die Klemmmittel (9) in einer an sich bekannten Art und Weise gegen den Draht (10) gedrückt werden können, indem es verschiebbar in einer Öffnung (24) in demjenigen Ende (22) des Steckteils (19) angeordnet ist, dass in dem Führungsteil (17) angeordnet ist, wobei bei der Klemmung der Verriegelungsvorrichtung (1) an dem Draht (10) eine konisch geformte innere Manteloberfläche in dem Führungsteil (17) das Klemmmittel (9) in eine Richtung nach innen gegen den Draht (10) in der hohlen Struktur (16) drückt, während die zweiten Federmittel (23) des Steckteils (19) in eine Richtung gegen die zweite Giebelwand (13) drücken und wobei zur Lockerung der Verriegelungsvorrichtung (1) vom Draht (10) die Federmittel (22, 23) zusammengepresst werden können, indem die Muffenverlängerung (18) in die Öffnung (14) in der benachbarten Giebelwand (12) gedrückt wird, die in Verbindung mit der Außenseite des Montageteils (3) angeordnet ist, sodass die Klemmmittel (9) vom Druck gegen den Draht (10) gelöst werden.

2. Verriegelungsvorrichtung nach Anspruch 1,
**dadurch gekennzeichnet,**
**dass** die Öffnung (24) in dem Steckteil (19) im Wesentlichen aus einem horizontal angeordneten Kanal (26) besteht, der ein Klemmmittel in Form einer Verriegelungskugel (27) beinhaltet, die seitwärts verschieblich in dem Kanal (26) durch das Steckelement (19) angeordnet ist.

3. Verriegelungsvorrichtung nach einem der Ansprüche 1 oder 2, **dadurch gekennzeichnet,**
**dass** die Verriegelungskugeln (27) zur weiteren seitlichen Verschiebung ausreichend Platz erhalten, indem die Muffenverlängerung (18) eingedrückt wird und indem die zweiten Federmittel (23) zusammengepresst werden, sodass der Draht (19) leicht durch die hohle Struktur (16) in der Verriegelungsvorrichtung (1) einführbar und ausführbar durch die Muffenverlängerung (18) ist, wobei die Verriegelungsvorrichtung (1) nach oben und nach unten entlang des Drahts (10) verschoben werden kann.

4. Verriegelungsvorrichtung nach einem der vorherigen Ansprüche, **dadurch gekennzeichnet,**
**dass** die Federmittel (22, 23) aus Schraubenfedern bestehen.

## Revendications

1. Dispositif de verrouillage à immobiliser de manière réglable en une position sur un fil ou une corde (10) y passant et qui est destiné à supporter un élément (2), de préférence un accessoire, par exemple un couvercle (3) afin de cacher un moyen (4) de support d'un accessoire dans un plafond (6), et qui comprend des moyens (7 à 9) de blocage coopérant l'un avec l'autre pour ménager un serrage du dispositif (1) de blocage sur le fil (10), les moyens de blocage consistant en deux manchons (7, 8) mobiles télescopiquement l'un dans l'autre ménagés dans un boîtier ou couvercle (11) auquel l'accessoire (3) est fixé et au moins un moyen (9) de serrage coopérant avec eux, le boîtier (11) comprenant des ouvertures (14, 15) dans ses parois (12, 13) de pignon sensiblement alignées avec une conformation (16) creuse pour le fil (10) passant dans les manchons (7, 8) et dont, parmi les manchons (7, 8), le premier (7) constitue une partie (17) femelle qui comprend en partie le deuxième manchon (8) et qui comprend un prolongement (18) de manchon faisant saillie dans l'une des ouvertures (14) du boîtier (11) en même temps que le deuxième manchon (8) constitue une partie (19) mâle dont l'une des extrémités (20) est entourée par la partie (17) femelle et dont la deuxième extrémité (21) libre fait saillie de la partie (27) femelle, **caractérisé en ce qu'**un premier moyen (22) à ressort est prévu à l'extrémité (21) libre et est destiné à repousser la partie (17) femelle dans une direction allant vers l'une des premières parois (12) de pignon, qui est destinée à supporter l'accessoire (3) et après montage à repousser sous un effet de ressort celui-ci en direction du plafond (6), en même temps qu'un deuxième moyen (23) à ressort est prévu sur la partie (17) femelle pour repousser la partie (19) mâle en direction de la deuxième paroi (13) de pignon, le moyen (9) de serrage pouvant être pressé d'une manière en soi connue sur le fil (10) par le fait qu'il est prévu mobile dans une ouverture (24) dans l'extrémité (20) de la partie (19) mâle qui est logée dans la partie (17) femelle, de sorte que, lors du serrage du dispositif (1) de blocage sur le fil (10), une surface (25) latérale intérieure de forme conique de la partie (17) femelle repousse le moyen (9) de serrage dans une direction vers l'intérieur sur le fil (10) dans la conformation (16) creuse, tandis que les deuxièmes moyens (23) à ressort repoussent la partie (19) mâle dans une direction vers la deuxième paroi (13) à pignon et, lorsque le dispositif (1) de blocage est débloqué du fil (10), les moyens (22, 23) à ressort peuvent être comprimés par compression dans le prolongement (18) de manchon dans l'ouverture (14) dans sa paroi (12) voisine de pignon qui est située en liaison avec l'extérieur de l'accessoire (3), de sorte que le moyen (9) de serrage peut être desserré de sa pression sur le fil (10).

2. Dispositif de blocage suivant la revendication 1, **caractérisé en ce que** l'ouverture (24) dans la partie (19) mâle consiste principalement en un canal (26) horizontal recevant un moyen de serrage sous la forme d'une bille (27) de blocage, qui est appliquée en étant mobile sur le côté dans le canal (26) par la partie (19) mâle.

3. Dispositif de blocage suivant la revendication 1 ou 2, **caractérisé en ce que** les billes (27) de blocage ont suffisamment d'espace pour se mouvoir davantage sur le côté par compression dans le prolongement (18) de manchon et par la compression du deuxième moyen (23) à ressort, de sorte que le fil (10) peut être inséré facilement dans la conformation (9) creuse du dispositif (1) de blocage et vers l'extérieur dans le prolongement (18) de manchon, de sorte que le dispositif (1) de blocage peut être déplacé vers le haut et vers le bas le long du fil (10).

4. Dispositif de blocage suivant l'une quelconque des revendications précédentes, **caractérisé en ce que** les moyens (22, 23) à ressort consistent en des ressorts hélicoïdaux.
